# EUROPEAN PATENT APPLICATION

(11) **EP 1 729 363 A1**
(43) Date of publication of application: **06.12.2006**
(21) Application number: 05720853.0
(22) Date of filing: 16.03.2005
(51) Int. Cl.: H01M 8/02, H01M 8/10, H01B 1/06, C08J 9/36, C08L 23/00

(54) **ELECTROLYTE FILM AND FUEL CELL**

(30) Priority: 19.03.2004 JP 2004079320
(71) Applicant: TOAGOSEI CO., LTD., Tokyo 105-8419 (JP)
(72) Inventor: HIRAOKA, Hideki, C/O TOAGOSEI CO., LTD., Nagoya-shi, Aichi 4550027 (JP); YAMAGUCHI, Takeo, Kawasaki-shi, Kanagawa 2160005 (JP)
(74) Representative: Pohlmann, Eckart
(86) International application number: PCT/JP2005/004599
(87) International publication number: WO 2005/091409

(57) **Abstract**

Provide an electrolyte membrane for a fuel cell, the electrolyte membrane having a structure in which pores of a porous substrate are filled with an electrolyte polymer, and for which, even if the membrane thickness and porosity of the substrate are equal and the amount of electrolyte used for filling is also the same, the highest fuel cell performance is given.

An electrolyte membrane formed by filling pores of a porous substrate with an electrolyte polymer, and having a ratio of the maximum value to the minimum value (maximum value / minimum value) of the ionic conductivity when measured in a plane direction in the range of 1 to 1.5.

## Description

The present invention relates to an electrolyte membrane, said electrolyte membrane being suitably used for an electrochemical device, particularly for a fuel cell, and more particularly for a direct alcohol fuel cell.

The performance of fuel cells, which are a type of electrochemical device employing a polymer electrolyte membrane, has improved outstandingly due to developments in electrolyte membranes and catalyst technology in recent years, and they have been attracting attention as a power source for low-emission automobiles or as a highly efficient power generation method. Among them, a fuel cell employing a polymer electrolyte membrane (solid polymer fuel cell) has a structure in which a reaction layer having an oxidation-reduction catalyst is formed on the surface of the membrane. In the solid polymer fuel cell, a reaction in which a hydrogen molecule is decomposed into protons and electrons occurs at a fuel electrode, the electrons thus generated operate an electric component and are carried to an oxygen electrode side via electric wires, and at the oxygen electrode water is generated from oxygen, protons, and electrons carried from the fuel electrode via the electric wires. Furthermore, in a direct methanol fuel cell (DMFC), methanol and water are supplied to a fuel electrode, and protons are taken out by reacting the methanol and water by means of a catalyst in the vicinity of a membrane. These fuel cells normally employ an electrolyte membrane formed from a polyperfluoroalkylsulfonic acid.

However, a polyperfluoroalkylsulfonic acid membrane has the problem that when it is used in a fuel cell in which a fuel solution is supplied directly to a cell, such as a direct methanol fuel cell, the methanol, etc. fuel penetrates the membrane, thus causing energy loss. Furthermore, since the membrane is swollen by the fuel such as methanol, etc. fuel, and its area changes greatly, problems such as a joint between an electrode and the membrane peeling apart easily occur, and there is also the problem that the fuel concentration cannot be increased. Moreover, there are the economic problems that the material itself is expensive due to it containing fluorine atoms, and since the production process is complicated and the productivity is low the cost is very high.

Because of this, there has been a desire for a polymer electrolyte membrane formed from an inexpensive hydrocarbon skeleton, for which penetration of methanol is suppressed when used in a direct methanol fuel cell. An electrolyte membrane for a fuel cell disclosed in Patent Publication 1 by the present inventors is formed by filling a porous substrate with an inexpensive proton-conducting polymer (electrolyte polymer); since the porous substrate is formed from a material that is resistant to deformation by an external force, such as polyimide or crosslinked polyethylene, excessive swelling of the electrolyte polymer with which the pores are filled by an aqueous solution of methanol can be prevented, and as a result, the penetration of methanol can be suppressed.

When the present inventors carried out a detailed examination into such an electrolyte membrane obtained by filling a porous substrate with an electrolyte polymer, it was found that even if electrolyte membranes for which the thickness and porosity of the porous substrate and the amount of electrolyte polymer used for filling are the same are employed, the cell performance of a fuel cell employing these electrolyte membranes is variable and is not constant in some cases.
(Patent Publication 1) Japanese Patent Application No. 2002-83612

It is an object of the present invention to find an electrolyte membrane for a fuel cell, the electrolyte membrane having the above-mentioned structure in which pores of a porous substrate are filled with an electrolyte polymer, and for which, even if the membrane thickness and porosity of the substrate are equal and the amount of electrolyte used for filling is also the same, the highest fuel cell performance is given.

The present inventors have found that, with regard to an electrolyte membrane formed by filling pores of a porous substrate with an electrolyte polymer, when the porous substrate is filled with the same amount of electrolyte of the same quality, in order to achieve the highest performance of a fuel cell employing the electrolyte membrane, it is important to design the electrolyte membrane so that the in-plane ionic conductivity anisotropy of the electrolyte membrane is low. It has been found that in this case the highest performance is obtained when the ratio of the maximum value to the minimum value (maximum value / minimum value; hereinafter, called the 'ionic conductivity anisotropy ratio') of the ionic conductivity measured in a plane direction is in the range of 1 to 1.5; furthermore, in order to obtain such an ionic conductivity anisotropy ratio it is desirable that the ratio of the maximum value to the minimum value (maximum value / minimum value; hereinafter, called the 'draw ratio') of the amount of draw of the porous substrate is close to 1, and when it is no greater than 2.5 high performance can be exhibited, and the present invention has thus been accomplished. 'Measured in a plane direction' means that measurement is carried out within the plane and not in the thickness direction of the membrane.

With regard to the electrolyte membrane of the present invention, by lowering the ionic conductivity-related anisotropy within the plane of the electrolyte membrane formed by filling pores of a porous substrate with an electrolyte polymer, the highest cell output per amount of electrolyte filling can be obtained compared with electrolyte membranes employing other porous substrates having the same thickness, material, and porosity, the efficiency of the fuel cell, etc. can be improved, and the permeability to methanol can be suppressed compared with a conventional fluorine-based electrolyte membrane.

The present invention is explained in detail below.

A process for producing a porous substrate used in the electrolyte membrane of the present invention is not particularly limited, and there are a method involving drawing, a method in which a film is formed by applying by means of a coater, etc. a solution or a melt of a membrane material in which a pore-forming material has been dispersed and evaporating off the solvent or cooling the molten material, etc, and then removing the pore-forming material to make pores, etc.

Among them, the most common method is the method involving drawing. In this method, a material forming a porous substrate and a liquid or solid pore-forming material are mixed by a method such as melt-mixing so as to finely disperse the pore-forming material in advance, this mixture is drawn while extruding from a T die, etc., and the pore-forming material is removed by a method such as washing to give the porous substrate. Furthermore, examples of the drawing method include methods such as uniaxial drawing and biaxial drawing. In general, the shape and the direction of pores formed in the membrane are determined by the draw ratio. The process for producing a porous substrate used in the present invention preferably employs biaxial drawing. This is because the uniaxial drawing method tends to cause tears in the substrate, and it is difficult to reduce the in-plane anisotropy of the membrane described in the present invention.

On the other hand, compared with the method involving drawing, the method involving coating is not desirable since the productivity is low, and properties such as pore size or porosity easily vary in the thickness direction of the membrane. Furthermore, in this method, although it is difficult for anisotropy in the plane direction to occur, anisotropy might be produced along the coating direction.

In the present invention, attention is focused on the ionic conductivity of an electrolyte membrane formed by filling a porous substrate with an electrolyte as described above being reflected in the anisotropy of the substrate. In order to achieve the highest performance for a fuel cell employing the electrolyte membrane, it is preferable to design it so that the in-plane ionic conductivity anisotropy of the electrolyte membrane is small. In this case, the highest performance can be obtained when the ionic conductivity anisotropy ratio in the plane direction is in the range of 1 to 1.5. In order to obtain such an ionic conductivity anisotropy ratio, the draw ratio of the substrate is preferably no greater than 2.5, and more preferably close to 1.

In this case, the reason why the preferred range for the ionic conductivity anisotropy ratio as an electrolyte is smaller than that for the draw ratio of the substrate is because the ionic conductivity anisotropy of an electrolyte membrane whose interior is filled with electrolyte tends to be smaller than the draw ratio of the substrate.

When the above-mentioned ratios are too large, although the function of the electrolyte membrane is exhibited, the output of a fuel cell relative to the amount of electrolyte used is small.

The ionic conductivity of such an electrolyte membrane is usually measured by an AC (alternating current) impedance method by interposing an electrolyte membrane immersed in water or an electrolytic solution between a pair of electrodes. In this process, conductivity involving conductivity in the plane direction of the membrane can be measured by moving one of the pair of electrodes in parallel in the plane direction. Furthermore, the difference in conductivity in the plane direction can be obtained by changing the direction of the electrolyte membrane between the electrodes. As a result of an examination by the present inventors, it has been found that the conductivity anisotropy depends on the drawing direction. Therefore, the maximum value and the minimum value of the in-plane conductivity can be detected by comparing measurements of conductivity in the drawing direction and in a direction perpendicular to the drawing direction for a uniaxially drawn membrane, and measurements of conductivity in two directions that are parallel to the drawing axes for a biaxially drawn membrane.

The porous substrate used in the present invention is preferably a material for which there is substantially no swelling in methanol or water and, in particular, it is desirable that the change in area when wetted with water compared with when dry is small or almost none. The increase in area when the porous substrate is immersed in methanol or water changes depending on the immersion time and temperature, and in the present invention the increase in area when immersed in pure water at 25°C for 1 hour is preferably no greater than 20% compared with when it is dry.

With regard to the porous substrate of the present invention, the tensile modulus of elasticity is preferably 500 to 5000 MPa, and more preferably 1000 to 5000 MPa, and the breaking strength is preferably 50 to 500 MPa, and more preferably 100 to 500 MPa.

When they are lower than these ranges, the membrane easily deforms due to a force caused when the filled electrolyte polymer tries to swell in methanol or water, and when they are higher than the above ranges, the substrate becomes too brittle and the membrane easily cracks during press-molding when bonding an electrode or during tightening, etc. when assembling into a cell. Furthermore, the porous substrate preferably has heat resistance to a fuel cell operating temperature and resistance to external force so that it does not easily stretch.

Examples of materials having such properties include engineering plastics such as aromatic polyimide, aramid, polysulfone, and polyether ether ketone, and polymers to which resistance to deformation such as stretching caused by an external force is imparted by a method such as drawing or crosslinking by exposing a polyolefin to radiation or addition of a crosslinking agent. These materials may be used singly or made into a composite by a method such as layering two or more types thereof.

Among these porous substrates, it is preferable to use one formed from a drawn polyolefin, a polyolefin crosslinked by exposure to an electron beam, etc., or a polyolefin that has been crosslinked by the above-mentioned method subsequent to drawing since they are readily available and the workability during a filling step is good.

The porosity of the porous substrate of the present invention obtained as above is preferably 5% to 95%, more preferably 5% to 90%, and particularly preferably 20% to 80%. Furthermore, the average pore size is preferably in the range of 0.001 to 100 µm, and more preferably 0.01 to 1 µm. When the porosity is too small, the number of ion-exchange groups per unit area is too small and the output as a fuel cell is low, and when it is too large the membrane strength is undesirably degraded. The thickness of the substrate is preferably no greater than 200 µm. It is more preferably 1 to 150 µm, yet more preferably 5 to 100 µm, and particularly preferably 10 to 50 µm. When the membrane thickness is too small, the membrane strength is degraded, and the amount of methanol penetrating increases, and when it is too large, the membrane resistance becomes too large and the output of a fuel cell is too low, both being undesirable.

The electrolyte membrane of the present invention is formed by filling pores of a porous substrate with an electrolyte polymer having an ion-exchange group. Filling with the polymer may be carried out by the use of a pre-polymerized polymer, but is preferably carried out by a method in which a porous substrate is impregnated with an electrolyte monomer, or a monomer that can be converted into a group that can function as an electrolyte after polymerization, or a solution or dispersion containing the above (hereinafter, called a 'polymer precursor'), followed by polymerization. In this process, the polymer precursor used for filling may contain a polymerization initiator, a catalyst, a curing agent, a surfactant, etc. as necessary.

After impregnating the porous substrate with the polymer precursor, it is preferable to interpose it between films, etc. in order to prevent the precursor from coming out of the pores of the porous substrate and give a uniform electrolyte membrane after polymerization. When the polymer precursor is radically polymerizable, the film has an effect in blocking oxygen in the air, which inhibits radical polymerization. The material of such a film is not particularly limited, but a plastic, etc. may be used, and a plastic film such as PET, polyethylene, polypropylene, cellophane, or polycarbonate is preferable. These films may be subjected to a surface treatment with a release agent such as a silicone.

The electrolyte polymer with which the porous substrate is filled in the present invention is not particularly limited as long as it has an ion-exchange group, and a normally known electrolyte polymer may be used.

When the porous substrate is filled with a pre-polymerized polymer, examples of polymers that can be used include polysulfone, polyether sulfone, polyether ketone, polyphenylene oxide, polyphenylene sulfide, polyamide, and polyimide etc., and an ion-exchange group may be introduced by a method such as sulfonation before or after filling.

On the other hand, when a radically polymerizable polymer is used as an electrolyte polymer, since this polymer can be polymerized at a relatively low temperature by appropriately selecting a polymerization initiator, it is preferable to employ a method in which after the porous substrate is impregnated with a polymer precursor formed by mixing an ion-exchange group-containing monomer, etc. as a starting material, polymerization is carried out to give an electrolyte membrane, because this method is simple.

In the present invention, when the electrolyte polymer with which the porous substrate is filled is a radically polymerizable polymer, as an ion-exchange group-containing monomer, which is a main component of the polymer precursor used, a protonic acid group-containing monomer is preferable since the performance when used as a fuel cell electrolyte membrane is good. This monomer is a compound having a polymerizable functional group and a protonic acid in a molecule. Specific examples thereof include 2-(meth)acrylamido-2-methylpropanesulfonic acid, 2-(meth)acrylamido-2-methylpropanephosphonic acid, styrenesulfonic acid, (meth)allylsulfonic acid, vinylsulfonic acid, isoprenesulfonic acid, (meth)acrylic acid, maleic acid, crotonic acid, vinylphosphonic acid, and an acidic phosphoric acid group-containing (meth)acrylate.

Furthermore, the monomer having a functional group that can be converted into an ion-exchange group is a salt, anhydride, ester, etc. of the above-mentioned compounds. When the acid residue of the monomer used is in the form of a derivative such as a salt, anhydride, or ester, by converting it into a protonic acid form after polymerization, proton conductivity may be imparted.

Moreover, as a monomer having a site into which an ion-exchange group can be introduced after polymerization, a benzene ring-containing monomer such as styrene, a-methylstyrene, chloromethylstyrene, or *t*-butylstyrene may preferably be used. Examples of a method for introducing an ion-exchange group into the above monomers include a method involving sulfonation using a sulfonating agent such as chlorosulfonic acid, conc. sulfuric acid, or sulfur trioxide.

'(Meth)acrylic' denotes 'acrylic and/or methacrylic', '(meth)allyl' denotes 'allyl and/or methallyl', and '(meth)acrylate' denotes 'acrylate and/or methacrylate'.

Among the above-mentioned compounds, a sulfonic acid group-containing vinyl compound or a phosphoric acid group-containing vinyl compound is preferable because of excellent proton conductivity, and 2-methylpropane-2-(meth)acrylamidosulfonic acid is more preferable due to high polymerizablility.

As a polymer precursor used in the present invention, a mixture of an ion-exchange group-containing monomer and a crosslinking agent is preferable. A compound that can be used as a crosslinking agent has at least two polymerizable functional groups per molecule, and by carrying out polymerization by mixing it with the above-mentioned protonic acid group-containing monomer or a salt thereof, etc. crosslinked sites are formed in a polymer, thus giving a polymer having a three-dimensional network structure, which does not dissolve or melt.

Specific examples thereof include *N,N'*-methylenebis(meth)acrylamide, polyethylene glycol di(meth)acrylate, polypropylene glycol di(meth)acrylate, trimethylolpropane diallyl ether, pentaerythritol triallyl ether, divinylbenzene, bisphenol di(meth)acrylate, isocyanuric acid di(meth)acrylate, tetraallyloxyethane, triallylamine, and a diallyloxyacetate. It is also possible to use a compound that has both a polymerizable double bond and another functional group that can undergo a crosslinking reaction. Examples of such a compound include *N*-methylolacrylamide, *N*-methoxymethylacrylamide, and *N*-butoxymethylacrylamide, and it may be crosslinked by a condensation reaction, etc. by heating after carrying out radical polymerization of the polymerizable double bond, or a crosslinking reaction may be carried out in the same manner by heating at the same time as radical polymerization.

Furthermore, the crosslinking functional group is not limited to those having a carbon-carbon double bond, and a di- or higher-functional epoxy compound or a phenyl group having a hydroxymethyl group, etc. may be used, although they are inferior since the polymerization reaction rate is low. When an epoxy compound is used, crosslinking may be carried out by a reaction with an acid such as a carboxyl group in the polymer, or a copolymerizable compound having a hydroxyl group, etc. may be added as a third component to the polymer precursor. These crosslinking agents may be used singly or in a combination of two or more types as necessary.

A third copolymerization component having no protonic acid group may be added to the polymer precursor used in the present invention as necessary in order to adjust swelling properties, etc. of the polymer. The third component is not particularly limited as long as it can copolymerize with the ion-exchange group-containing monomer and the crosslinking agent used in the present invention, and examples thereof include (meth)acrylic acid esters, (meth)acrylamides, maleimides, styrenes, vinyl organic acids, allyl compounds, and methallyl compounds.

In the present invention, a method for polymerizing the ion-exchange group-containing monomer of a polymer precursor within pores of the porous substrate is not particularly limited, but in the case of radical polymerization, as easy methods, irradiation with active energy beam such as an electron beam or ultraviolet rays, heating, etc. are preferably used.

Examples of radical polymerization initiators for thermally initiated polymerization or redox initiated polymerization that can be used in the above are as follows.

Azo compounds such as 2,2'-azobis(2-amidinopropane) dihydrochloride; peroxides such as ammonium persulfate, potassium persulfate, sodium persulfate, hydrogen peroxide, benzoyl peroxide, cumene hydroperoxide, and di-*t*-butylperoxide; a redox initiating agent formed by combination of the above-mentioned peroxide and a reducing agent such as a sulfite, a bisulfite, a thiosulfate, formamidinesulfinic acid, or ascorbic acid; and azo radical polymerization initiators such as 2,2'-azobis-(2-amidinopropane) dihydrochloride and azobiscyanovaleric acid. These radical polymerization initiators may be used singly or in a combination of two or more types.

Among the above-mentioned polymerization means, polymerization that is photoinitiated by ultraviolet rays is desirable since the polymerization reaction is easy to control and a desired electrolyte membrane is obtained with good productivity by a relatively simple process. Furthermore, when photoinitiated polymerization is carried out, it is more preferable to dissolve or disperse a radical photopolymerization initiator in the polymer precursor in advance.

Examples of the radical photopolymerization initiator include benzoin, benzil, acetophenone, benzophenone, thioxanthone, thioacridone, and derivatives thereof, which are generally used in ultraviolet polymerization, and specific examples thereof include benzophenone types such as methyl *o*-benzoylbenzoate, 4-phenylbenzophenone, 4-benzoyl-4'-methyldiphenylsulfide, 3,3',4,4'-tetra(*t*-butylperoxycarbonyl)benzophenone, 2,4,6-trimethylbenzophenone, 4-benzoyl-*N,N*-dimethyl-*N*-[2-(1-oxy-2-propenyloxy)ethyl]benzenemethanaminium bromide, (4-benzoylbenzyl)trimethylammonium chloride, 4,4'-dimethylaminobenzophenone, and 4,4'-diethylaminobenzophenone; thioxanthone types such as thioxanthone, 2-chlorothioxanthone, 2,4-diethylthioxanthone, and 2-ethylthioxanthone; thioacridone types such as thioacridone; benzoin types such as benzoin, benzoin methyl ether, benzoin isopropyl ether, benzoin ethyl ether, and benzoin isobutyl ether; acetophenone types such as acetophenone, propiophenone, diethoxyacetophenone, 2,2-dimethoxy-1,2-diphenylethan-1-one, 1-hydroxycyclohexyl phenyl ketone, 2-methyl-1-(4-(methylthio)phenyl)-2-morpholinopropane-1, 2-benzyl-2-dimethylamino-1-(4-morpholinophenyl)butan-1-one, 2-hydroxy-2-methyl-1-phenylpropan-1-one, and 1-(4-(2-hydroxyethoxy)-phenyl)-2-hydroxydi-2-methyl-1-propan-1-one; and benzil compounds such as benzil.

The amount of photopolymerization initiator used is preferably 0.001 to 1 weight % relative to the total weight of the ion-exchange group-containing monomer and the third component, which is an unsaturated monomer, more preferably 0.001 to 0.5 weight %, and particularly preferably 0.01 to 0.5 weight %. Among them, an aromatic ketone radical polymerization initiator such as benzophenone, thioxanthone, or thioacridone is preferable since it can generate a radical by abstracting hydrogen from a carbon-hydrogen bond and, when used in combination with an organic material such as a polyolefin as a porous substrate, it can form a chemical bond between the surface of the substrate and the polymer used for filling.

In the present invention, when impregnating the porous substrate with the polymer precursor, it is preferable to make a solution or a dispersion by mixing a monomer, a crosslinking agent, and a polymerization initiator, etc. as necessary, since it then becomes easy to carry out filling. When this is a liquid having a low viscosity, it can be used as it is for impregnation, and the solution preferably has a concentration of 10% to 90%, and more preferably 20% to 70%.

Furthermore, when a component that is insoluble in water is used, some or all of the water may be replaced with an organic solvent, but it is preferable to use an aqueous solution, since it is necessary to remove all the organic solvent before joining an electrode when an organic solvent is used. The reason why impregnation is carried out using a solution is because impregnation into a porous substrate having fine pores is facilitated by the use of a solution in water or a solvent, and because forming a pre-swollen gel within a pore can exhibit an effect in preventing polymer within the pore from coming out due to the polymer being swollen too much by water or methanol when an electrolyte membrane thus formed is made into a fuel cell.

Furthermore, when the polymer precursor is used, in order to enhance the durability of the electrolyte membrane, it is preferable to improve adhesion between the porous substrate and the polymer used for filling, and because of this the porous substrate may be subjected to either irradiation with active energy beam such as radiation, an electron beam, or ultraviolet rays, or a treatment with plasma, ozone, or corona discharge, or a combination thereof. Furthermore, a radical polymerization initiator that abstracts hydrogen may simply be attached to the surface. In this case, it is preferable to carry out attachment by contacting a solution of a radical generator in a solvent with the porous substrate and then removing the solvent since it then becomes uniformly attached to the interior of the pores.

For the purpose of facilitating the impregnation procedure, it is preferable to add a surfactant to a solution or dispersion of the polymer precursor, or carry out irradiation with ultrasonic waves during impregnation.

The electrolyte membrane of the present invention may preferably be used in a solid polymer fuel cell and, in particular, in a direct methanol fuel cell. When the electrolyte membrane is used in such a fuel cell, it is widely known that the electrolyte membrane is interposed between two sheets of electrodes to which a catalyst represented by platinum is added and subjected to hot pressing, etc. to give an integrated membrane electrode assembly (MEA), which is then incorporated into a fuel cell for actual use, and the electrolyte membrane of the present invention may be used by forming an MEA by the same method and incorporating it into a fuel cell.

### Examples

### (Example 1)

As a porous substrate, a polyethylene membrane (thickness 16 µm, porosity 48%, average pore size about 0.1 µm, draw ratio = 1/1) was prepared. This porous membrane was subsequently immersed in a polymer precursor solution comprising 50 g of 2-acrylamido-2-methylpropanesulfonic acid, 5 g of *N,N'*-methylenebisacrylamide, 0.005 g of a nonionic surfactant, 0.005 g of an ultraviolet radical polymerization initiator, and 50 g of water, thus filling the membrane with the solution. Subsequently, the porous substrate was pulled out of the solution, and it was then interposed between two sheets of 50 µm thick PET film so that no bubbles were entrapped. Following this, ultraviolet rays were applied to the top of the PET film on both sides at a power of 1000 mJ/cm² per side using a high pressure mercury lamp, thus polymerizing the monomer in the polymer precursor. The PET films were then peeled off, and washing with distilled water was carried out to give an electrolyte membrane.

The membrane thus obtained was immersed in distilled water at 25°C for 1 hour, the maximum value and the minimum value for the proton conductivity along a plane direction within the membrane were determined and their ratio was calculated. The permeability to methanol was also measured. Moreover, the membrane thus obtained was interposed between catalyst-equipped electrodes and hot-pressed by a method that will be described later to give an MEA, and the cell performance (highest cell output) as a direct methanol fuel cell was measured. These evaluation results are summarized in Table 1.

### (Example 2)

An electrolyte membrane was obtained in the same manner as in Example 1 except that as the porous substrate a polyethylene membrane (thickness 16 µm, porosity 48%, average pore size about 0.1 µm, draw ratio = 2/1) was used. This membrane was subjected to evaluation in the same manner as in Example 1, and the results are given in Table 1.

### (Comparative Example 1)

An electrolyte membrane was obtained in the same manner as in Example 1 except that as the porous substrate a polyethylene membrane (thickness 16 µm, porosity 48%, average pore size about 0.1 µm, draw ratio = 3/1) was used. This membrane was subjected to evaluation in the same manner as in Example 1, and the results are given in Table 1.

### (Comparative Example 2)

An electrolyte membrane was obtained in the same manner as in Example 1 except that as the porous substrate a polyethylene membrane (thickness 16 µm, porosity 48%, average pore size about 0.1 µm, draw ratio = 4/1) was used. This membrane was subjected to evaluation in the same manner as in Example 1, and the results are given in Table 1.

### (Method for evaluating proton conductivity of membrane formed)

The membrane thus formed was immersed in distilled water at 25°C for 1 hour; while the surface thereof was wet, the membrane was interposed between two glass plates having one rectangular platinum electrode affixed thereto, and here the electrodes were parallel and separated by 2 cm. Measurement of AC impedance from 100 Hz to 40 MHz was then carried out to give the proton conductivity. The maximum value and the minimum value were determined by changing the direction of the membrane. The higher the conductivity, the easier it is for protons to move in the electrolyte membrane, thus exhibiting its excellence in application to a fuel cell.

In Table 1, the proton conductivity anisotropy ratio is expressed as the 'proton conductivity maximum value / proton conductivity minimum value'. The average proton conductivity is the average value of the proton conductivity maximum value and the proton conductivity minimum value.

### (Method for evaluating performance of fuel cell)

### (1. Formation of MEA)

As an oxygen electrode a platinum-supporting carbon (TEC10E50E, manufactured by Tanaka Kikinzoku Kogyo K.K.) was used, and as a fuel electrode a platinum ruthenium alloy-supporting carbon (TEC61 E54, manufactured by Tanaka Kikinzoku Kogyo K.K.) was used. These catalyst powders were mixed with a polymer electrolyte solution (Nafion 5% solution, manufactured by DuPont) and a polytetrafluoroethylene dispersion and stirred while adding water as appropriate to give a reaction layer coating solution. This was printed on one side of a carbon paper (TGP-H-060, manufactured by Toray Industries, Inc.) by a screen printing method and dried to give an electrode. In this process, the amount of platinum on the oxygen electrode side was 1 mg/cm², and the total amount of platinum and ruthenium on the fuel electrode side was 3 mg/cm². They were superimposed on a central area of the electrolyte membrane with the coated side as the inside, and hot-pressed at 130°C to give a fuel cell membrane electrode assembly (MEA). This was incorporated into a single fuel cell, the cell was operated, and the performance was ascertained.

### (2. Evaluation of fuel cell)

An MEA formed using the electrolyte membrane of Examples and Comparative Examples was incorporated into a single direct methanol fuel cell, and the cell was operated under the following operating conditions. Fuel was a 3 mol % aqueous solution of methanol, and the oxidizing agent was pure oxygen. The cell temperature was 50°C. The current-voltage characteristics were measured by changing the current by means of an electron loader, the maximum value for the output, which was expressed by current x voltage, was determined, and the performance of each electrolyte membrane was compared in terms of the highest output and is summarized in Table 1.

**(Table 1)**

| | Substrate draw ratio | Membrane evaluation | | Cell performance |
|---|---|---|---|---|
| | | Proton conductivity anisotropy ratio | Average proton conductivity | Highest output |
| | | | S/cm² | mW/cm² |
| Example 1 | 1 | 1.1 | 33 | 96 |
| Example 2 | 2 | 1.4 | 28 | 92 |
| Comparative Example 1 | 3 | 1.8 | 23 | 83 |
| Comparative Example 2 | 4 | 2.5 | 18 | 73 |

The electrolyte membrane of the present invention is formed by filling pores of a porous substrate with an electrolyte, and its in-plane ionic conductivity is characterized by the difference between the highest value and the lowest value being small; an electrolyte membrane formed in such a range has high ionic conductivity, and a fuel cell employing this has a high electrical generation performance. This electrolyte membrane is particularly suitable for a direct methanol fuel cell.

## Claims

1. An electrolyte membrane comprising a porous substrate and an electrolyte polymer, the electrolyte membrane being formed by filling the pores of the porous substrate with the electrolyte polymer, and the porous substrate having a ratio of the maximum value to the minimum value (maximum value / minimum value) of the ionic conductivity measured in a plane direction of no greater than 1.5.

2. The electrolyte membrane according to Claim 1, wherein the porous substrate is produced via a drawing step, and the ratio of the maximum value to the minimum value (maximum value / minimum value) of the amount of drawing within the plane is no greater than 2.5.

3. The electrolyte membrane according to either Claim 1 or 2, wherein the porous substrate is produced via a biaxial drawing step.

4. The electrolyte membrane according to any one of Claims 1 to 3, wherein the porous substrate comprises a polyolefin or a crosslinked polyolefin.

5. The polymer electrolyte membrane according to any one of Claims 1 to 4, wherein the polymer electrolyte membrane is obtained by impregnating the porous substrate with an electrolyte monomer, or a monomer that can be converted into a group that can function as an electrolyte after polymerization, or a solution or dispersion containing the above, and then polymerizing the monomer.

6. A fuel cell that incorporates the electrolyte membrane according to any one of Claims 1 to 5.
